(19) Europäisches Patentamt
European Patent Office
Office européen des brevets

(11) Publication number: 0 119 042 B1

(12) # EUROPEAN PATENT SPECIFICATION

(45) Date of publication of patent specification: 29.06.88

(51) Int. Cl.[4]: H 02 H 1/00, H 02 H 7/26

(21) Application number: 84301387.1

(22) Date of filing: 02.03.84

(54) **Protective relay system.**

(30) Priority: 04.03.83 JP 35525/83

(43) Date of publication of application: 19.09.84 Bulletin 84/38

(45) Publication of the grant of the patent: 29.06.88 Bulletin 88/26

(84) Designated Contracting States: CH DE FR GB LI

(58) References cited:
GB-A-2 000 399
US-A-3 882 361

(73) Proprietor: KABUSHIKI KAISHA TOSHIBA
72, Horikawa-cho Saiwai-ku
Kawasaki-shi Kanagawa-ken 210 (JP)

(72) Inventor: Andow, Fumio c/o Patent Division
Tokyo Shibaura Denki K.K. 72, Horikawa-cho
Saiwai-ku Kawasaki-shi Kanagawa-ken (JP)
Inventor: Inagaka, Junichi c/o Patent Division
Tokyo Shibaura Denki K.K. 72, Horikawa-cho
Saiwai-ku Kawasaki-shi Kanagawa-ken (JP)

(74) Representative: Kirk, Geoffrey Thomas et al
BATCHELLOR, KIRK & EYLES 2 Pear Tree Court
Farringdon Road
London EC1R 0DS (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 119 042 B1

## Description

This invention relates to a protective relay system, and more particularly to a protective relay system which protects a power system on the basis of terminal information quantities received at respective electric stations and communicated to each other by means of optical transmission means.

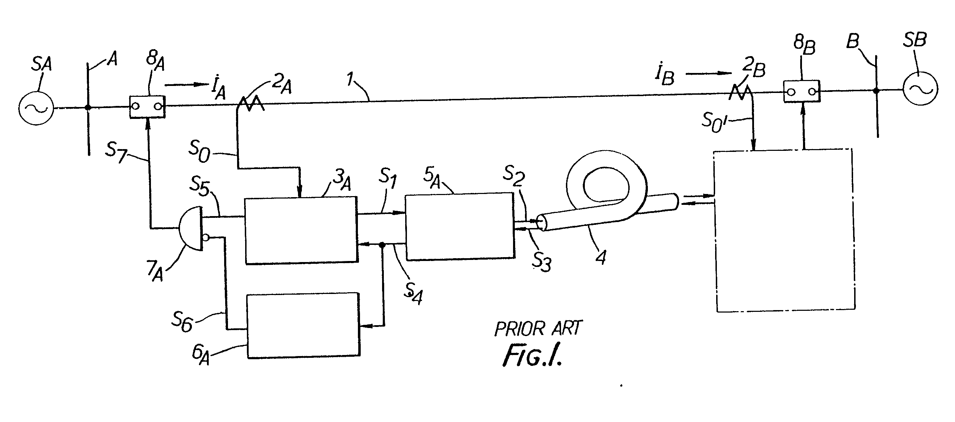

In recent years, the technology of optical communication lines supported by optical fibres as information transmission routes has entered the field of protective control engineering. Signal transmission by means of optical transmission means has significant advantages, such as freedom from adverse environmental influences, particularly from electromagnetic disturbances. Thus, applications to protective relay systems have become known in which highly reliable information transmission is indispensable. This known system utilising optical transmission will now be described with reference to Figure 1 of the accompanying drawings. Although the diagram illustrates an electric station A, a similar arrangement is also used for an electric station B.

In Figure 1, characters $S_A$ and $S_B$ represent power sources at the first and second electric stations A and B, respectively. Currents $I_A$ and $I_B$ which flow at the respective first and second electric stations A and B into a transmission line 1 are, respectively, converted by current transformers $2_A$ and $2_B$ into signals $S_0$ and $S_0'$. The output signal $S_0$ from the current transformer $2_A$ is fed into a protective relay $3_A$. The protective relay $3_A$ is a failure district detection relay that receives the electrical quantities at both ends of the transmission line 1 and operates when a fault occurs on the transmission line 1, (more strictly on that portion of the transmission line inside the installation point of the current transformers $2_A$ and $2_B$). The protective relay $3_A$ is, for example, a current differential relay or a phase comparison relay. A current differential relay will be described herein. The protective relay $3_A$ utilises the signal $S_0$ for operation judgment and also transmits it through an optical transmission line 4 to the opposite end of the line. To perform this optical transmission, the protective relay $3_A$ converts the signal $S_0$ into a signal $S_1$ so as to meet the specified input condition of a PCM (pulse code modulation) optical terminal device $5_A$. The optical terminal device $5_A$ receives the signal $S_1$, mixes it so as to produce a multiplex signal and, in turn, converts the multiplex signal into an optical signal $S_2$. Further, the optical terminal device $5_A$ converts an optical signal $S_3$ received through the optical transmission line 4 from an electric station B into an electrical signal, and also separates the multiplexed electrical signal so as to produce a signal $S_4$ which is outputted to the protective relay $3_A$. The signal $S_4$ is also fed into an error detection circuit $6_A$. The protective relay $3_A$ converts the received signal $S_4$ into the specified signal level therein and compares this converted signal with the signal $S_0$ of its own electric station so as to judge whether to operate with respect to the instantaneous value of the current. When the protective relay $3_A$ detects a fault on the transmission line 1, it then produces an output signal $S_5$ which is a trip-enabling signal.

The error detection circuit $6_A$ receives the signal $S_4$ so as to monitor whether any abnormalities exist in the signal $S_4$ due to the optical transmission line 4, and when any abnormality is detected, the circuit $6_A$ outputs a relay lock signal $S_6$. An inhibit circuit $7_A$ receives the signals $S_5$ and $S_6$ and, where the relay output signal $S_5$ is "1" and the relay lock signal $S_6$ is "0", the circuit $7_A$ establishes logical output "1" which serves as a trip output signal $S_7$ so as to trip a power circuit breaker $8_A$. Thus, in this system, when the error detection circuit $6_A$ detects abnormalities in the signal $S_4$, the circuit $6_A$ outputs the relay lock signal $S_6$ as "1" to the inhibit circuit $7_A$ so as to inhibit the trip of the power circuit breaker $8_A$ (a so-called trip-lock).

The above-described protective relay system is described in the following prior art:—

1. The transactions No. 1081 of the Institute of Electrical Engineers of Japan in 1981 nationwide convention entitled "FM carrier current differential relay by means of optical transmission".

This discloses a system of a so-called FM carrier current differential relay in which the input and output signals $S_1$ and $S_4$ of the protective relay $3_A$ in Figure 1 are FM (frequency modulation) signals and the carrier waves thereof are modulated by the system current signals, and a PCM 24 terminal device is utilised as an interface of the optical terminal device $5_A$. For the operation judgment in the protective relay $3_A$, analog signals are used, and the error detection circuit $6_A$ monitors abnormalities of the FM signals on the basis of either detection of out-range frequencies or comparison of periods of FM signals adjacent to one another, so as to detect abnormalities in the signal transmission system.

2. Japanese Patent Publications No. 57-9292.

This discloses a system in which the input and output signals $S_1$ and $S_4$ of the protective relay $3_A$ are of signals digitally coded, and sampling of these signals is performed in synchronism with each other at the respective electric stations, and then the digitally coded current information is reciprocally transmitted. In the error detection circuit $6_A$, there are utilised well-known methods, such as level-lowering detection, parity check, cyclic code detection, and dual-simultaneous reference.

3. The transactions No. 1083 of the Institute of Electrical Engineers of Japan in 1981 nationwide convention entitled "Current differential protective relaying system utilising optical PCM transmission".

This discloses a system in which the current information of an electric sub-station is digitised and optically transmitted to the main electric station. On the other hand, in the main electric station, the digital signals are converted into analog signals and, by utilising the analog signals, the operation judgment based on the current differential protection method is performed. The result of this judgment is transmitted to the substation by means of optical transmission. In the error detection circuit 6, failures in optical transmission are detected on the basis of the signal pattern tests and the detection of a signal loss.

In the above-described conventional protective systems, when a failure of signal transmission occurs in the transmission process, the output of the trip circuit is inhibited and this prevents mistripping of the circuit breaker even when the protective relay is erroneously operated by the effect of failures in the relay input information. This preventive procedure solves the problem as to a temporary failure of signal transmission system, however, there still exist problems with continuous failures in the information transmission routes, such as damage or burn-out of optical cables.

Such problems are than when a failure continues, then the trip-lock also continues. Thus, should a system fault occur during this trip lock, the elimination of the fault inevitably depends upon the back-up protection which is provided. However, the fault elimination which depends upon the back-up protection, necessarily produces a time-delay compared to that performed by a power circuit breaker based on the main protection because the trip is made in a time-limit trip fashion. Thus, delay in eliminating a fault could be hazardous depending upon the degree of the fault. A distance relay, which is set in a first zone, and which is one of the back-up protection relays, sometimes trips instantaneously. However, this distance relay covers approximately 80% of the entire length of the transmission line up to the opposite side bus of a district to be protected. Thus, the system failure in the remaining district of 20%, that is, in the vicinity of the opposite side bus, does not cause the first stage distance relay to be operated.

Furthermore, there are also other problems as follows. At present, such a method has been put into practical use where optical fibres for use in optical transmission are incorporated within the overhead wires of the transmission lines. This is extremely economical because separate routes for the optical transmission lines are not required. However, in the case of accidents, such as destruction of a pylon supporting the overhead transmission line, fire, or destruction by earthquake, the optical transmission is stopped at substantially the same time as the occurrence of the system fault. Therefore, despite the occurrence of the system fault, the relay is unintentionally locked and the elimination of the system fault inevitably depends upon the back-up protection relay. Further, the same problem exists in the case of co-installation of optical fibres and transmission lines within underground transmission conduits.

British Patent Specification A-2000399 discloses a protective relaying system for an electric power transmission line which normally operates by comparing a locally-sensed quantity with a value transmitted digitally from the other end of the line, the transmission code includes redundancy so that the occurrence of errors in the received signal may be detected, and on detection of such errors the normal comparator is blocked and instead an alternative fault detector, responsive only to locally-sensed quantities, is brought into operation. The alternative fault detector may be a distance relay normally providing delayed back-up protection but rendered effective for immediate operation if the density of errors in the received signal is too high.

U.S. Patent Specification No. A—3882 361 discloses a protective relay system in which signals are transmitted between two stations, with the provision of signal discontinuity detection means and means to enable local tripping during the initial time period of a channel failure.

According to the present invention, a protective relay system for a transmission line between first and second electric stations, said first station having a power circuit breaker connected in said transmission line and means for detecting a first electrical quantity of said transmission line and said second electric station having means for detecting a second electrical quantity of said transmission line; said system comprising optical transmission means including first and second optical terminal means provided at said first and second electric stations, respectively, and an optical transmission line connected between said first and second optical terminal means, said second optical terminal means being arranged to receive an electrical signal corresponding to said second electrical quantity and to convert it to an optical signal which is transmitted along said optical transmission line, said first optical terminal means being arranged to receive said transmitted optical signal and to convert it to a first electrical signal; a first protective relay arranged to receive said first electrical signal and a signal corresponding to said first electrical quantity and to produce a first relay output signal in the event of a fault on said transmission line being detected, error detection means arranged to receive said first electrical signal and to produce a relay lock signal in the event of an abnormality being detected in the first electrical signal; and first logic circuit means arranged to receive said first relay output signal and said relay lock signal and to produce a first trip command for said circuit breaker when said first relay output signal indicates that a fault is detected and said relay lock signal indicates the absence of any abnormality in the first electrical signal; is characterised in that the system further comprises a second protective relay arranged to receive said signal corresponding to the first electrical quantity and produce a second relay output signal when a fault on the transmission line is detected based on the first electrical quantity; signal discontinuity detection means arranged to receive said first electrical signal and to produce an enabling signal in the event of a discontinuity in said first electrical signal being detected; and second logic circuit means arranged to receive said second relay output signal and said enabling signal to produce a second trip command for the circuit breaker when said second relay output signal indicates a fault on the transmission line and said enabling signal indicates a discontinuity in the first electrical signal; said first optical terminal means comprises third and fourth optical terminal means; said second optical terminal means comprises fifth and sixth optical terminal means connected to receive said signal corresponding to said second electrical quantity for converting said signal into first and second optical signals, respectively as said optical signal; and said optical transmission line receives said first and second optical signals a transmits them to said third and fourth optical terminal means, respectively, where they are converted to third and fourth electrical signals, respectively; switching means connected to receive said third and fourth electrical signals and to select one of said third and fourth electrical signals to produce the first electrical signal; and a switching command circuit or a judgment circuit arrange to switch the output of the switching means to select the other of said third and fourth electrical signals when discontinuity is detected.

In order that the invention may be more readily understood, it will now be described, by way of example only, with reference to the accompanying drawings, in which:—

Figure 1 is a diagram of a known protective relay system utilising optical transmission lines;

Figure 2 is a schematic diagram illustrating an alternative protective relay system;

Figures 3(a)—3(c) are time charts which explain operation upon occurrence of faults; Figure 3(a) shows the case where a fault has occurred only on the transmission line, Figure 3(b) the case where only transmission signal discontinuity on the optical transmission line has occurred, and Figure 3(c) the case where the fault on the transmission line and the discontinuity in the transmission signal have occurred concurrently;

Figure 4 is a schematic diagram illustrating a still further protective relay system;

Figure 5 is a time chart explaining the operation of the system shown in Figure 4;

Figure 6 is a schematic diagram illustrating a connection relationship between the optical terminal device and a signal discontinuity detection circuit in one embodiment; and

Figures 7, 8 and 9 are schematic diagrams illustrating embodiments of a protective relay system according to the present invention.

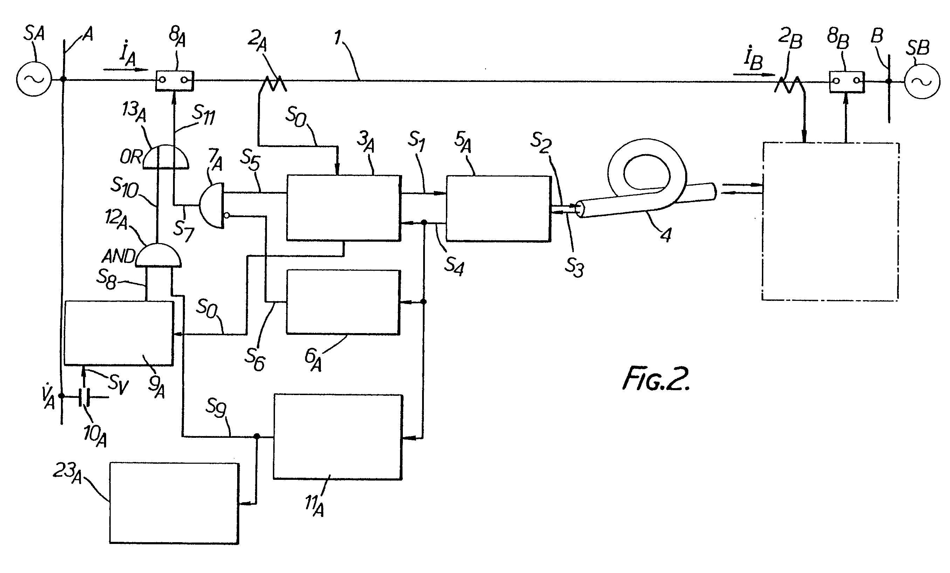

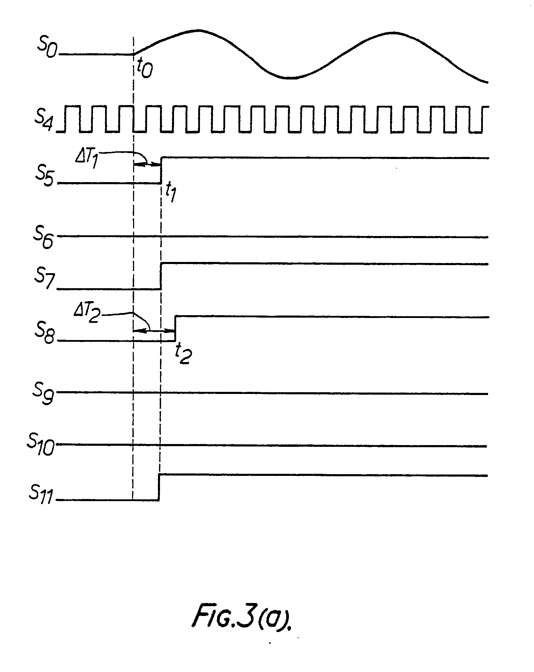

In Figure 2, like reference numerals represent parts identical in function as those in Figure 1. Reference numeral $9_A$ represents a second protective relay, such as a distance relay which receives the signal $S_0$ corresponding to the current $\dot{I}_A$ and a signal $S_V$ corresponding to the voltage $\dot{V}_A$, respectively, through a current transformer $2_A$ and a potential transformer $10_A$, and judges whether or not a fault lies within an operational region. The operational region is determined so as to at least cover the entire length of the transmission line 1. The second protective relay $9_A$ outputs an operation output signal $S_8$. When a signal discontinuity detection circuit $11_A$ receives signal $S_4$ from optical terminal device $5_A$, and detects the discontinuity of the signal $S_4$, the circuit $11_A$, then outputs an enabling signal $S_9$. The enabling signal $S_9$ is fed into a signal discontinuity alarm device $23_A$. Logic circuit means in the form of an AND gate $12_A$ receives the signal $S_8$ from the relay $9_A$ and the enabling signal $S_9$ from the detection circuit $11_A$ and, when both signals $S_8$ and $S_9$ are in "1" state, the AND circuit $12_A$ then outputs a trip output signal $S_{10}$. OR circuit $13_A$ receives a trip output signal $S_7$ and the trip output signal $S_{10}$ and, when either one of the signals is in "1" state, OR circuit $13_A$ then outputs a trip signal $S_{11}$ so as to trip the power circut breaker $8_A$. The structures other than those described above are identical to those shown in Figure 1 so that the descriptions thereof are omitted.

The response principle of the second protective relay $9_A$ may be derived from the principle of the conventional well-known distance relay, which is considered as having mho characteristics which can be expressed in the following judgment equation:

$$|\dot{Z}/2\dot{I}|-|\dot{V}-\dot{Z}/2\dot{I}|-K_0>O \qquad (1)$$

where,

$\dot{V}$: voltage input (signal $S_V$),

$\dot{I}$ : current input (signal $S_0$),

$\dot{Z}$: setting value corresponding to the system impedance,

$K_0$: constant.

For the signal discontinuity detection circuit 11A, the conventional well-known detecting method of transmission system signal discontinuity may be utilised, and some of the examples thereof will be hereinafter described.

In the case where the first protective relay $3_A$ is an FM carrier current differential relay, the signal discontinuity of the FM signal may be detected according to the peak value detection method with respect to FM signal waveforms disclosed in Japanese Patent Publication No. 56-42216. In this method, the signal discontinuity is detected by detecting that the peak value of the FM signal becomes smaller than a predetermined value. When the input signals $S_1$ and $S_4$ of the first protective relay $3_A$ are pulse signals of a so-called PCM carrier current differential relay, such a method has been generally utilised that a synchronised pattern which invariably includes "1" signals is employed, or that "1" signals are inserted at every specified bit. Namely, the method employs such a signal transmission format as not to have a continuous "O" state of pulse signals. Thus, when "O" signals continue for longer than the specified period, this can be judged as the signal discontinuity. This signal discontinuity detection method is conventionally used and well-known for those skilled in the art, so that detailed descriptions of the circuit configurations are omitted.

Next, the operations in the respective cases will be described.

First, the case where the optical transmission system comprised of an optical transmission line 4 and an optical terminal device $5_A$ operates under normal condition will be described. In this case, because the entire optical transmission system is in normal operation, the relay lock signal $S_6$ is not outputted from the error detection circuit $6_A$, so that the output signal $S_5$ of the first protective relay $3_A$ may be outputted from the inhibit circuit $7_A$. The enabling signal $S_9$ is not outputted from the signal discontinuity detection circuit $11_A$ so that the AND circuit 12A inhibits the output signal $S_8$ of the second protective relay $9_A$. Thus, in the case where the optical transmission system is in a normal condition, in the same manner as in the conventional structure, the first protective relay $3_A$ judges whether or not a fault occurs in the power system to be protected and, when it judges that a fault has occurred, the relay $3_A$ then produces the output signal $S_5$ that causes the inhibit circuit $7_A$ to produce the trip output signal $S_{11}$.

Secondly, in the case of occurrence of errors (errors in data) in transmission signal caused by noises and the like, the error detection circuit $6_A$ detects these abnormalities then the relay lock signal $S_6$ is produced so as to inhibit the output of the inhibit circuit $7_A$. On the other hand, the signal discontinuity detection circuit $11_A$ does not judge the error of the transmission signal as a signal discontinuity so that the enabling signal $S_9$ is not outputted for the AND circuit $12_A$ which results in the inhibiting of the output of the trip signal $S_{10}$ from the AND circuit $12_A$. Therefore, in the case of occurrence of errors in transmission signal, in the same manner as in the conventional method, the occurrence of the signal $S_7$ based on the operation of the first protective relay $3_A$ is inhibited only within the period in which such errors occur, so that false operations caused by data errors may be prevented.

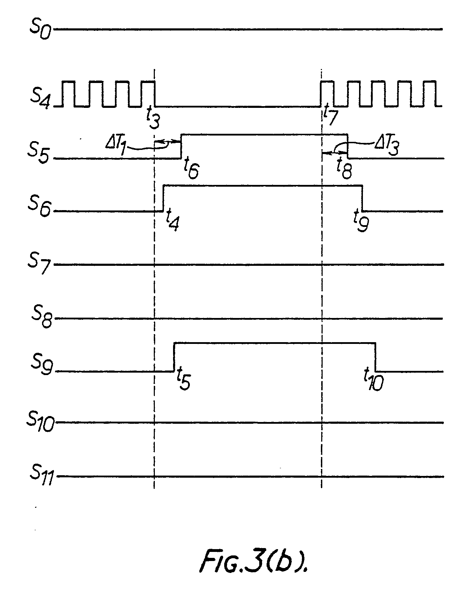

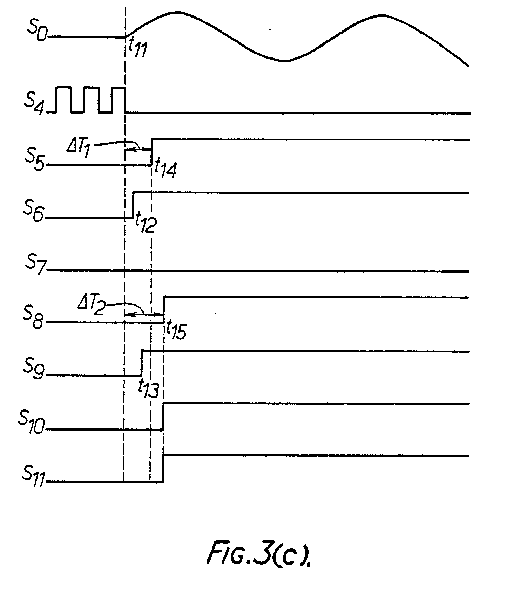

Figures 3(a), 3(b) and 3(c) are diagrams illustrating time charts to explain the operations upon occurrence of both faults and transmission signal discontinuity. Specifically, Figure 3(a) shows the case where a transmission line fault only has occurred, Figure 3(b) the case where the transmission signal discontinuity only has occurred, and Figure 3(c) the case where a fault on the transmission line and the transmission signal discontinuity have simultaneously occurred. Here, the signal $S_4$ outputted from the optical terminal device $5_A$ is shown as a PCM signal as an example.

Figure 3(a) shows the case when a fault occurs on the transmission line 1 at a time $t_0$ so that the current transformer $2_A$ produces a fault current output signal $S_0$ and the input signal $S_4$ fed into the relay $3_A$ is normal. Therefore, both the error detection circuit $6_A$ and the signal discontinuity detection circuit $11_A$ take no responding operation, and the first protective relay $3_A$ produces the relay output $S_5$ at a time $t_1$ which is delayed by the time $\Delta T_1$ (operation time) which is required by the relay $3_A$ in order to respond. In this case, since the signal $S_4$ is in a normal condition, the relay lock signal $S_6$ of the error detection circuit $6_A$ still remains as "0" so that the trip output signal $S_7$ and the signal $S_{11}$ become "1" at the same time at which the relay output signal $S_5$ is produced.

On the other hand, when the second protective relay $9_A$ detects occurrence of a fault, the protective relay $9_A$ produces the relay output signla $S_8$ at a time $t_2$ which is delayed by the operation time $\Delta T_2$ of the second protective relay $9_A$. However, since the signal $S_4$ is normal, the signal discontinuity detection circuit $11_A$ does not produce the enabling signal $S_9$ of "1", i.e. $S_9$ remains as "0". Thus, the trip output signal $S_{10}$ remains as "0", and the power circuit breaker $8_A$ is tripped by the trip output signal $S_7$.

Figure 3(b) shows the case where a signal discontinuity occurs during the period between a time $t_3$ and a time $t_7$. When the signal discontinuity occurs, the first protective relay $3_A$ causes the relay output signal $S_5$ to be changed to "1" from "0" at a time $t_6$ which is delayed from the time $t_3$ by the operation time $\Delta T_1$. Furthermore, at a time $t_8$ which is delayed from the time $t_7$ by the operation time $\Delta T_3$, the protective relay $3_A$ causes the relay output signal $S_5$ to be returned to "0" from "1". On the other hand, due to the discontinuity of the signal $S_4$, the error detection circuit $6_A$ causes the relay lock signal $S_6$ to be changed to "1" from "0" at a time $t_4$ and, upon recovery of signal discontinuity, at a time $t_9$ the circuit $6_A$ causes the signal $S_6$ to be returned to "0" from "1". The signal discontinuity detection circuit $11_A$ causes the enabling signal $S_9$ to be changed to "1" from "0" at a time $t_5$ and, at a time $t_{10}$, the circuit $11_A$ causes the signal $S_9$ to be returned to "0" from "1". The state "1" of the relay lock signal $S_6$ and the state "1" of the enabling signal $S_9$ appears earlier than the state "1" of the relay output $S_5$ so that there exists a relationship such that $t_4 < t_5 < t_6$.

When the signal discontinuity is recovered, the return of the relay lock signal $S_6$ and the enabling signal $S_9$ appear later than the time $t_8$ and, in general, there exists such a relationship that $t_8 < t_9 < t_{10}$. Therefore, even when operations of the relay output signal $S_5$ occur during the period between the time $t_6$ to $t_8$, the relay lock signal $S_6$ continues the state "1" so that the trip output signal $S_7$ remains as "0". Further, even when a signal discontinuity of the signal $S_4$ occurs, the input of the second protective relay $9_A$ remains normal so that the output signal $S_8$ of the second protective relay $9_A$ remains as "0". This causes the AND circuit $12_A$ not to produce the trip output signal $S_{10}$ despite the fact that the enabling signal $S_1$ continues as "1" during the period between the time $t_5$ to $t_{10}$. As described above, since both the trip output signal $S_7$ and the trip output signal

$S_{10}$ remains as "0", the signal $S_{11}$ remains as "0". Here, the enabling signal $S_9$ is also fed into a signal discontinuity alarm device $23_A$ so that, when a signal discontinuity is detected, the alarm device $23_A$ operates so as to warn an operator. As a result, the thus informed operator may take such a step as to manually lock the operation of the second protective relay $9_A$. This step of locking the operation of the second protective relay is not necessarily needed, however, in the case where a power system fault occurs on the power source SB side of the electric station B after a certain period from the time at which a signal discontinuity is detected. This prevents a possible mistrip caused by the second protective relay $9_A$.

Figure 3(c) shows the case where a fault on the transmission line 1 and a discontinuity of the signal $S_4$ occur simultaneously at time $t_{11}$. Due to the discontinuity of the signal $S_4$, the relay lock signal $S_6$ from the error detection circuit $6_A$ becomes "1" at time $t_{12}$, and the enabling signal $S_9$ from the signal discontinuity detection circuit $11_A$ also becomes "1" at time $t_{13}$. On the other hand, the first protective relay $3_A$ produces the relay output signal $S_5$ of "1' at time $t_{14}$ which is delayed by the operation time $\Delta T_1$ from the time $t_{11}$ of fault occurrence, however, at this instant, the relay lock signal $S_6$ remains as "1" so that the trip output signal $S_7$ remains as "0". However, responding to the fault, the second protective relay $9_A$ produces the relay output signal $S_8$ of "1" at time $t_{15}$ which is delayed by the operation time $\Delta T_2$ from the time $t_{11}$ of the occurrence of a fault. Thus, at the time $t_{15}$, the trip output signal $S_{10}$ becomes "1" so that the output signal $S_{11}$ becomes "1' so as to cause the power circuit breaker $8_A$ so to be tripped. This means that, should the destruction of a pylon or a similar accident occur resulting in substantial concurrence of the signal discontinuity, and the fault on the transmission line, the second protective relay $9_A$ would detect such failure so as to cause the power circuit breaker $8_A$ to be tripped. Similar operations are also performed within the electric station B so as to trip the power circuit breaker $8_B$.

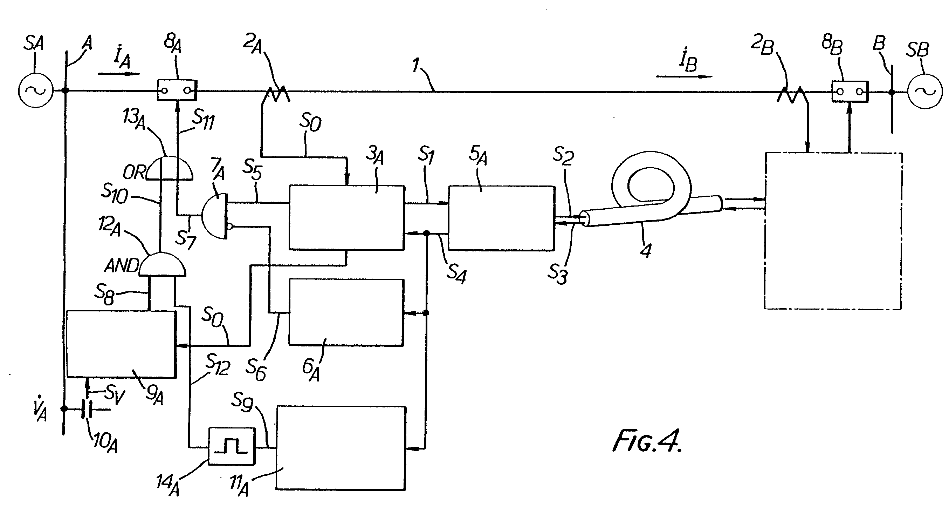

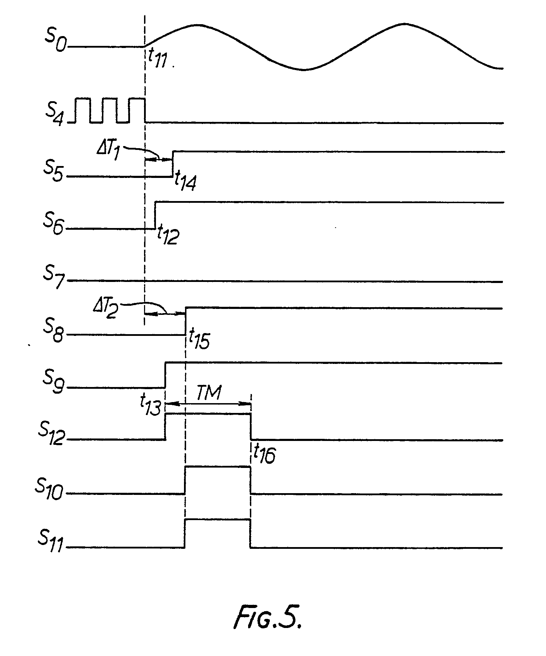

As shown in Figure 4, during a specified period only (such as $T_M$ in Figure 5), after a signal discontinuity detection performed by a detection circuit $11_A$, is an output $S_8$ of a second protective relay $9_A$ caused to be outputted, thereby instantaneously eliminating a fault in the case of concurrence of failures both in optical transmission signal and in power transmission system.

In Figure 4, reference numerals 1—$13_A$ correspond to those in Figure 2, and the only difference is that there is inserted a one shot circuit $14_A$ between the signal discontinuity detection circuit $11_A$ and AND circuit $12_A$. The one shot circuit $14_A$ produces an output signal $S_{12}$ only for a specified period (one shot time, i.e. $T_M$ in Figure 5) after reception of an enabling signal $S_9$ from the signal discontinuity detection circuit $11_A$.

As can be seen, the output signal $S_8$ of the second protective relay $9_A$ is inhibited after the specified period $T_M$ so that it is not necessary to take into consideration the protective co-operation with a subsequent district.

The above-described structure is provided so that, because the operational region of the second protective relay covers the entire district of the transmission line 1, it is necessary to include a part of the subsequent district (the district between the electric station B and the power source SB in Figure 4) which takes errors of the operation limits into consideration. Thus, the second protective relay $9_A$ tends to instantaneously operate by responding even to a failure in the subsequent district. In this case, the operation of the second protective relay $9_A$ is an unnecessary operation and should be avoided. To overcome this, it can be considered to take such a protective action so that the instant at which the second protective relay $9_A$ outputs the trip signal appears later than the instant at which a relay in the subsequent district outputs a trip signal with respect to the fault in the subsequent district. However, should such a protective action, derived from the time difference, be employed, the instant at which the circuit breaker is tripped is inevitably delayed when a fault on the transmission line 1 and a fault on the optical transmission line 4 occur substantially simultaneously. On the other hand, such a probability can be neglected on the basis of past experience that, when a signal discontinuity is detected, a power system fault in the subsequent district can occur within a short period thereafter. Therefore, this embodiment features the above-described characteristics as follows. Namely, the period in which the second protective relay $9_A$ detects a fault and outputs a trip signal is designed to be limited only to a short time, such as the period $T_M$, after a signal discontinuity detection is performed. This is based on the concept that the period $T_M$ may be designated as the time between the occurrence of a signal discontinuity caused by accidents, such as a pylon destruction, and the occurrence of a ground short circuit of the transmission line.

Figure 5 explains the operation in the case where, at a time $t_{11}$, a fault on the transmission line 1 and the discontinuity of the signal $S_4$ occur simultaneously.

The difference between Figure 5 and Figure 3(c) is only that the output signal $S_{12}$ of the one shot circuit $14_A$ is added and thereby the trip output signals $S_{10}$ and $S_{11}$ are changed.

In the time chart, the output signal $S_{12}$ remains as "1" from the time $t_{13}$ at which the signal discontinuity detection circuit $11_A$ outputs the enabling signal $S_9$ to the time $t_{16}$ which is delayed by the one shot time $T_M$. Here, relay $9_A$ operates at a time $t_{15}$ which is between the times $t_{13}$ and $t_{16}$, and the trip output signal $S_{10}$ depends on the AND circuit $12_A$ so that the output signal $S_{11}$ becomes "1" during the period between the times $t_{15}$ and $t_{16}$.

The period ($t_{15}$—$t_{16}$) during which the output signal $S_{11}$ remains as "1" should be sufficiently long as to trip the power circuit breaker $8_A$. The period $T_M$ can be, in effect, sufficiently secured because it is determined to be longer than the period between disconnection of signal transmission lines 4 caused by faults, such as pylon destruction and the occurrence of ground short circuit of the transmission line 1.

Although, in this embodiment, the case where the one shot circuit is inserted has been described, it is not limited to this one shot circuit and it is obvious that any circuit would be satisfactory as long as such a function is provided that produced the output for a certain specified period after reception of its input signal.

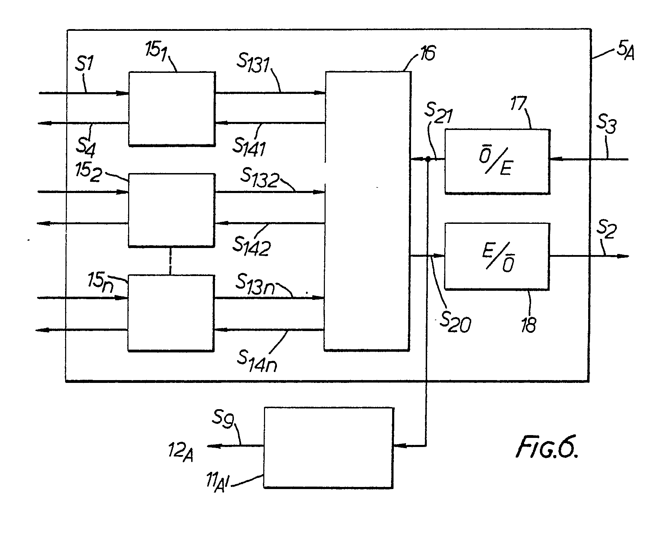

Figure 6 is a schematic diagram illustrating the connection relationship between an optical terminal device $5_A$ and a signal discontinuity detection circuit $11_A'$. The optical terminal device $5_A$ includes first multiplex circuits $15_1$—$15_n$, a second multiplex circuit 16, an optical-to-electricity conversion circuit (hereinafter simply referred to as $\bar{O}$/E conversion circuit) 17 and an electricity-to-optical conversion circuit (hereinafter simply referred to as E/$\bar{O}$ conversion circuit) 18. The first multiplex circuit $15_1$ receives an output signal $S_1$ from the first protective relay $3_A$, and processes it in time sharing multiplex, thereby converting it into signals $S_{131}$ and further, at the same time, separating a signal $S_4$ from signals $S_{141}$ outputted from the second multiplex circuit 16. Here, the multiplex circuits $15_2$—$15_n$ transmit and receive signals between other devices (not shown). The second multiplex circuit 16 receives the signals $S_{131}$—$S_{13n}$ and processes them in time sharing multiplex, thereby converting into a signal $S_{20}$ and, at the same time, separates a signal $S_{21}$ into signal $S_{141}$—$S_{14n}$. The $\bar{O}$/E conversion circuit 17 receives an opposite side terminal signal $S_3$ through the optical transmission line 4 and converts it into an electrical signal $S_{21}$ and, in turn, outputs the same to the second multiplex circuit 16. The signal $S_{21}$ is also fed into a signal discontinuity detection circuit $11_{A'}$. On the other hand, the E/$\bar{O}$ conversion circuit 18 receives the signal $S_{20}$ which is an electrical signal from the second multiplex circuit 16 and converts it into an optical signal $S_2$ and, in turn, outputs the same.

As for the above-desscribed optical terminal device, the first multiplex circuits $15_1$—$15_n$ correspond to PCM$_{-24}$ terminals, the signal $S_{131}$—$S_{13n}$ and $S_{141}$—$S_{14n}$ correspond to a PCM primary group (1.5 MB/s), the signals $S_{20}$ and $S_{21}$ correspond to a PCM secondary group (6.3 Mb/s), and the second multiplex circuit 16 corresponds to a PCM-6M multiplex conversion device, respectively. In this case, the signals $S_1$ and $S_4$ are designed to utilise voice-grade channels. Here, the signal discontinuity detection circuit $11_{A'}$ is so arranged as to directly receive the signal $S_{21}$, thereby permitting the circuit $11_A'$ to judge signals of higher transmission speed, i.e. signals of rapid variations compared to the signals of the signal discontinuity detection circuit $11_A$ in Figure 2. Further, the first and second multiplex circuit $15_1$—$15_N$ and 16 are not included within the detection region of the signal discontinuity detection circuit $11_{A'}$ so that the circuit $11_A'$ can detect signal discontinuity within such structural portions that have a high possibility of concurrence of optical transmission signal faults and power system faults, thereby reducing unnecessary responding operation of the signal discontinuity detection circuit $11_A'$.

In the above-described embodiment, signal discontinuity detection is performed by virtue of the signal discontinuity detection circuit $11_A'$, utilising the signal $S_{21}$ from the $\bar{O}$/E conversion circuit 17, however, it is obvious that such detection can also be performed by any one of the signals $S_{141}$—$S_{14n}$ outputted from the second multiplex circuit 16. In general, multiplex conversion circuits incorporated within the optical terminal device $5_A$, that is, the first and second multiplex circuits are provided with functions of signal discontinuity detection within the respective circuits, thereby producing alarm outputs. Therefore, these alarm outputs may also be utilised as the enabling signals $S_9$.

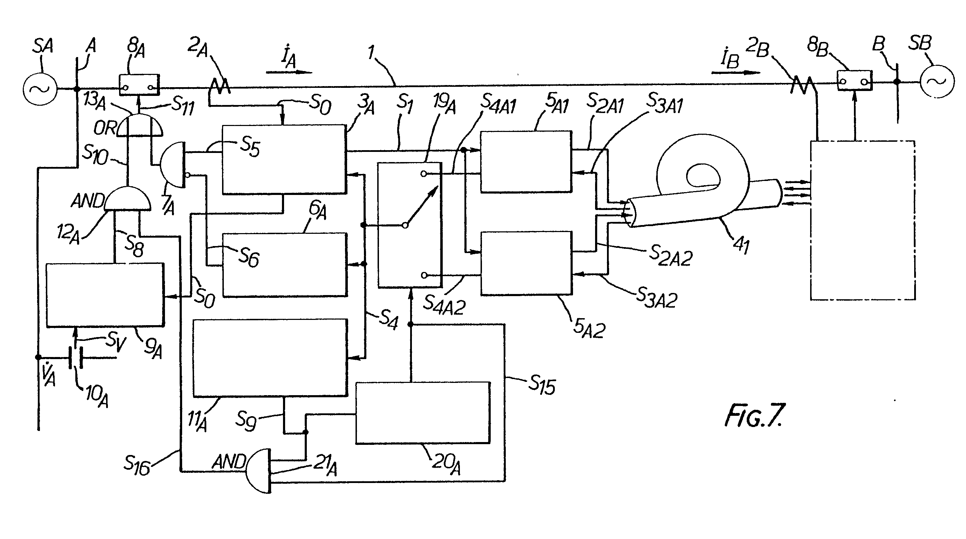

In Figure 7, reference numerals 1—$13_A$ correspond to like reference numerals in Figure 2. Optical terminal devices $5_{A1}$ and $5_{A2}$ are devices into which the optical terminal device $5_A$ is divided. The optical terminal device $5_{A1}$ which is usually in use receives a signal $S_1$ and outputs an optical signal $S_{2A1}$ processed in multiplex conversion to an optical transmission line $4_1$ while, at the same time, receives an optical signal $S_{3A1}$ and separates it into a signal $S_{4A1}$ and, in turn, outputs the same. The optical terminal device $5_{A2}$ which in reverse, in the same manner as in the optical terminal device $5_{A1}$, receives the signal $S_1$ and outputs an optical signal $S_{2A2}$ processed in multiplex conversion to the optical transmission lines $4_1$ while, at the same time, receives an optical signal $S_{3A2}$ and separates it into a signal $S_{4A2}$ and, in turn, outputs the same. Here, the optical transmission line $4_1$ incorporates a four-optical fibre cable for use in transmission of the signals $S_{2A1}$, $S_{2A2}$, $S_{3A1}$ and $S_{3A2}$. A switching circuit $19_A$, which is comprised of semiconductor elements, for example, receives the signals $S_{4A1}$ and $S_{4A2}$, respectively, and usually outputs the signal $S_{4A1}$ as a signal $S_4$, however, upon reception of a switching signal $S_{15}$, which will be described later in detail, the switching circuit $19_A$ rapidly switches the signal $S_{4A1}$ to the signal $S_{4A2}$ which is outputted as the signal $S_4$. A signal discontinuity detection circuit $11_A$ receives the signal $S_4$ so as to detect the discontinuity thereof and outputs a first enabling signal $S_9$ to a switching command circuit $20_A$ and an AND circuit $21_A$, respectively. The switching command circuits $20_A$ outputs, upon reception of the first enabling signal $S_9$, the switching signal $S_{15}$ to the switching circuit $19_A$ and the AND circuit $21_A$, respectively. When both the first enabling signal $S_9$ and the switching signal $S_{15}$ are in "1", the AND circuit $21_A$ outputs a second enabling signal $S_{16}$ to an AND circuit $12_A$. The switching command circuit $20_A$ can readily be realised by use of, for example, a set/reset circuit with a set input of the first enabling signal $S_9$.

In operation, the optical terminal device $5_{A1}$ performs transmit-receive operation under normal conditions. In this case, the signals of transmission and reception are $S_{2A1}$ and $S_{3A1}$, respectively. In this state, when a signal discontinuity occurs in the signal $S_{4A1}$, the signal discontinuity detection circuit $11_A$ detects the discontinuity and outputs the first enabling signal $S_9$. On the other hand, the switching command circuit $20_A$, upon reception of this enabling signal $S_9$, outputs the switching signal $S_{15}$ to the switching circuit $19_A$ which in turn, switches the use of the optical terminal device $5_{A1}$ to the use of the reserve optical terminal device $5_{A2}$ and then outputs the signal $S_{4A2}$ as the signal $S_4$.

When the cause of signal discontinuity lies only in the signal $S_{3A1}$, i.e. the signal $S_{3A2}$ is normal, switching the optical terminal devices can cause the signal $S_4$ to be in a normal condition so that the first enabling signal $S_9$ which is the output of the signal discontinuity detection circuit $11_A$ returns to "0" state. Therefore, in this case, the AND circuit $21_A$ receives only the switching signal $S_{15}$ as "1" and, thus, the AND condition is not established so that the second enabling signal $S_{16}$ is not outputted.

On the other hand, in the case where the optical transmission line $4_1$ is disconnected, even after switching of the optical terminal devices, the first enabling signal $S_9$ remains as "1". Thus, both the inputs of the AND circuit $21_A$, that is, the first enabling signal $S_9$ and the switching signal $S_{15}$ maintain "1". Thereby the second enabling signal $S_{16}$ is outputted as "1". Hereinafter, the operations according to the above-mentioned respective cases will be described.

In the system provided with the dual optical terminal devices and optical fibre cables, when both the signal transmission lines fall causing failure of signal discontinuity, it can be judged that the signal discontinuity has occurred in signal transmission line so that unnecessary operations of the relay can be extremely suppressed. Further, in this embodiment, even when the multiplex system is structured in triplicate, such a method as dual structure judgments of signal discontinuity may similarly be employed.

When the signal discontinuity of the output signal $S_{4A1}$ from the optical terminal device $5_{A1}$ is detected, both the first enabling signal $S_9$ and the switching signal $S_{15}$ may become "1", in some cases, during a short period from the instant at which the switching signal $15_A$ is outputted until the instant at which the switching circuit $19_A$ completes the switching function. However, in the case when the overlapped time of the two signals $S_9$ and $S_{15}$ develops problems, the problems may be solved by providing, for instance, the AND circuit $21_A$ with a function of time limit operation.

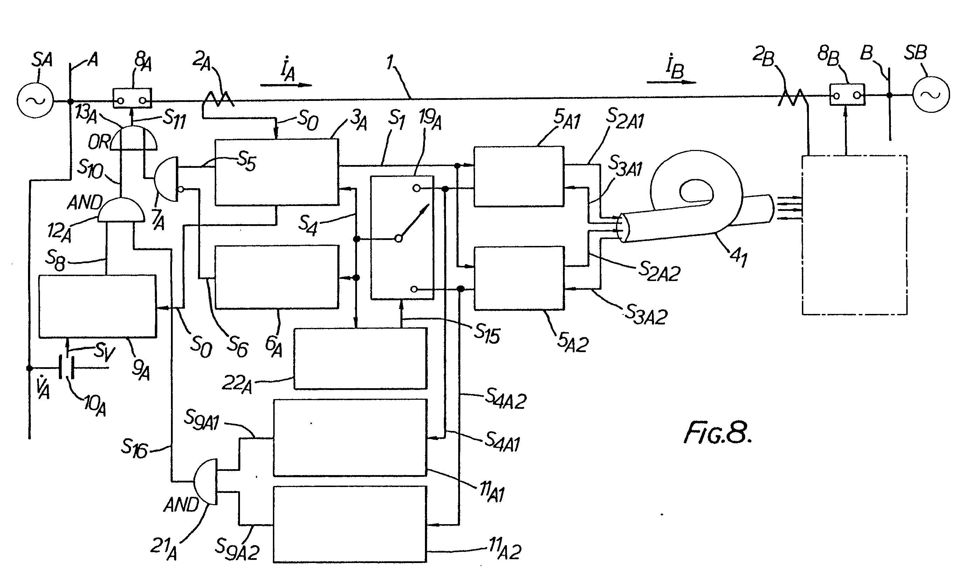

In the embodiment shown in Figure 8, there is provided two signal discontinuity detection circuits so as to monitor optical transmission lines that include optical terminal devices and, when both signals $S_{4A1}$ and $S_{4A2}$ are judged as being in a signal discontinuity, a second enabling signal $S_{16}$ is outputted.

In Figure 8, reference numerals 1—$21_A$ correspond to like reference numerals in Figure 7. A switching judgment circuit $22_A$ receives a signal $S_4$ and monitors the signal $S_4$ so as to check whether or not failures occur in optical transmission lines that include an output signal $S_{4A1}$ of an optical terminal device $5_{A41}$, which is usually in use, and a switching circuit $19_A$. When the optical terminal device $5_{A1}$ in use is judged to be unstable, the switching judgment circuit 22A outputs a switching signal $S_{15}$ so as to switch the optical terminal device $5_{A1}$ to an optical terminal device $5_{A2}$ in reserve. Further, there are provided two signal discontinuity circuits $11_{A1}$ and $11_{A2}$ so as to respectively receive the output signals $S_{4A1}$ and $S_{4A2}$ of the optical terminal devices $5_{A1}$ and $5_{A2}$, and to respectively output enabling signals $S_{9A1}$ and $S_{9A2}$ to an AND circuit $21_A$. The AND circuit $21_A$ receives the enabling signals $S_{9A1}$ and $S_{9A2}$ and, when both the signals are in "1", i.e. both the signals $S_{9A1}$ and $S_{9A2}$ are judged as in signal discontinuity, outputs a second enabling signal $S_{16}$.

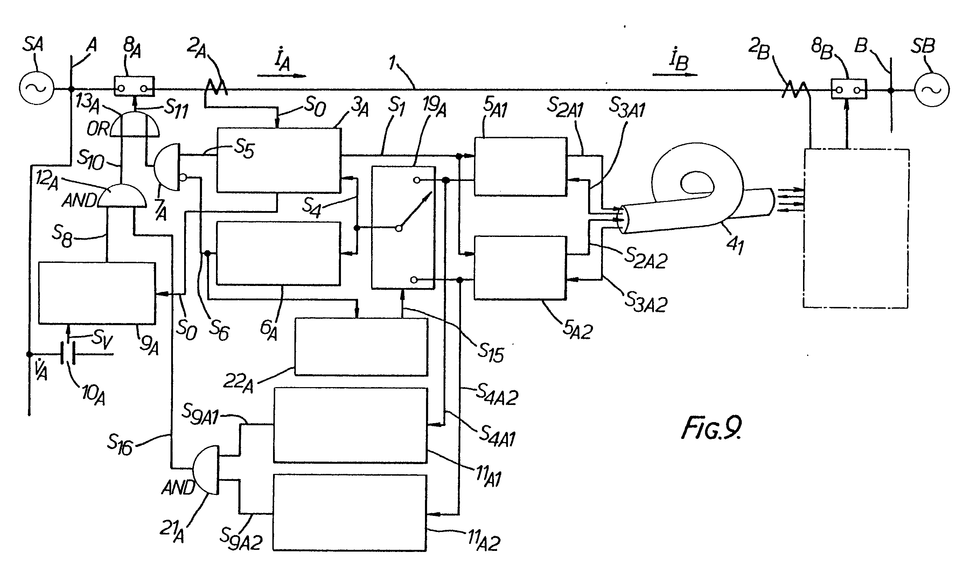

The switching judgment circuit 22A, which is a conventionally used circuit, detects errors of the same type as to be detected by an error detection circuit $6_A$ and judges that such detections have frequently occurred or have invariably continued and thereby outputs the switching signal $S_{15}$. Here, the switching judgement circuit $22_A$ is so arranged as to receive the signal $S_4$, however, it may also receive the signal $S_{4A1}$. The error detection method of the switching judgment circuit $22_A$ can be identical to that of the error detection circuit $6_A$ as described above. Thus, it is also possible that the switching judgment circuit $22_A$ receives the output $S_6$ of the error detection circuit $6_A$ so that the switching judgment circuit $22_A$ detects only error-occurrence frequency and error-continuation time, as shown in the schematic diagram of the embodiment of Figure 9.

In accordance with the above-described embodiment shown in Figures 8 and 9, the detections of signal discontinuity are executed at the respective optical terminals so that switching-awaiting time is not needed. Consequently, the second enabling signal can be rapidly outputted in response to the signal discontinuity of the optical transmission lines $4_1$.

In the embodiments described above with reference to Figures 7, 8 and 9, there are installed two pairs of optical transmission lines. However, it is obvious that the cables may also be one pair instead and that only the optical terminal devices are in dual structure. Further, even in the case where the dual terminal structures is modified into a multi-terminal structure, the above-described method can also be employed.

Furthermore, the first protective relay $3_A$ has been explained as a current differential relay, however, this may also be substituted by a phase comparison relay or a direction comparison relay. This is because any relay that can respond to the electrical quantities of both side terminals and judge whether or not a failure exists within a district to be protected can be used with the system. Similarly, the second protective relay $9_A$ may also also be an overcurrent relay in place of a distance relay. The point is that there is no problem so long as the system failures can be detected.

Moreover, in the aforementioned embodiments, the respective devices have been explained as the individually discrete circuits, however, this is not limiting and, naturally, the first protective relay $3_A$, the second protective relay $9_A$ and the peripheral circuits thereof can be realised in an integral device with software processing by utilising a protective relay which incorporates microcomputers, i.e. so-called digital relay.

## Claims

1. A protective relay system for a transmission line (1) between first and second electric stations (A, B), said first station (A) having a power circuit breaker ($8_A$) connected in said transmission line and means ($2_A$) for detecting a first electrical quantity of said transmission line and said second electric station (B) having means ($2_B$) for detecting a second electrical quantity of said transmission line; said system comprising optical transmission means including first (5A) and second optical terminal means provided at said first (A) and second (B) electric stations, respectively, and an optical transmission line ($4_1$) connected between said first and second optical terminal means, said second optical terminal means being arranged to receive an electrical signal corresponding to said second electrical quantity and to convert it to an optical signal which is transmitted along said optical transmission line, said first optical terminal means ($5_A$) being arranged to receive said transmitted optical signal and to convert it to a first electrical signal ($S_4$); a first protective relay ($3_A$) arranged to receive said first electrical signal ($S_4$) and a signal ($S_0$) corresponding to said first electrical quantity and to produce a first relay output signal ($S_5$) in the event of a fault on said transmission line being detected, error detection means ($6_A$) arranged to receive said first electrical signal ($S_4$) and to produce a relay lock signal ($S_6$) in the event of an abnormality being detected in the first electrical signal ($S_4$); and first logic circuit means ($7_A$) arranged to receive said first relay output signal ($S_5$) and said relay lock signal ($S_6$) and to produce a first trip command ($S_7$) for said circuit breaker ($8_A$) when said first relay output signal ($S_5$) indicates that a fault is detected and said relay lock signal ($S_6$) indicates the absence of any abnormality in the first electrical signal ($S_4$); characterised in that the system further comprises a second protective relay ($9_A$) arranged to receive said signal ($S_0$) corresponding to the first electrical quantity and produce a second relay output signal ($S_8$) when a fault on the transmission line is detected based on the first electrical quantity; signal discontinuity detection means ($11_A$) arranged to receive said first electrical signal ($S_4$) and to produce an enabling signal ($S_9$) in the event of a discontinuity in said first electrical signal being detected; and second logic circuit means ($12_A$) arranged to receive said second relay output signal ($S_8$) and said enabling signal ($S_9$) to produce a second trip command ($S_{10}$) for the circuit breaker when said second relay output signal ($S_8$) indicates a fault on the transmission line and said enabling signal ($S_9$) indicates a discontinuity in the first electrical signal; said first optical terminal means ($5_A$) comprises third and fourth optical terminal means ($5_{A1}$, $5_{A2}$); said second optical terminal means comprises fifth and sixth optical terminal means connected to receive said signal corresponding to said second electrical quantity for converting said signal into first and second optical signals ($S_{3A1}$, $S_{3A2}$), respectively, as said optical signal; and said optical transmission line ($4_1$) receives said first and second optical signals and transmits them to said third and fourth optical terminal means, respectively, where they are converted to third and fourth electrical signals ($S_{4A1}$, $S_{4A2}$), respectively; switching means ($19_A$) connected to receive said third and fourth electrical signals and to select one of said third and fourth electrical signals to produce the first electrical signal ($S_4$); and a switching command circuit ($20_A$) or a judgment circuit ($22_A$) arranged to switch the output of the switching means ($19_A$) to select the other of said third and fourth electrical signals when discontinuity is detected.

2. A protective relay system as claimed in claim 1, characterised in that the signal discontinuity detection means ($11_A$) are arranged to receive said first electrical signal ($S_4$) and to produce an enabling signal ($S_{12}$) for only a predetermined time period in the event of a discontinuity in said first electrical signal being detected, said time period being sufficient for the second trip command to bring about the tripping of the circuit breaker.

3. A protective relay system as claimed in claim 2, characterised in that said signal discontinuity detection means ($11_A$) includes means ($14_A$) connected to receive said enabling signal ($S_9$) and to supply it to the second logic circuit means ($12_A$) for only a predetermined time period after said discontinuity in said first electrical signal is detected.

4. A protective relay system as claimed in any preceding claim, characterised in that said optical transmission line ($4_1$) includes first and second optical transmission lines connected to receive and transmit said first and second optical signals to said third and fourth optical terminal means, respectively.

5. A protective relay system as claimed in any preceding claim, characterised in that the switching command circuit ($20_A$) is arranged to receive said enabling signal ($S_9$) and produce a switching signal ($S_{15}$) and an AND circuit ($21_A$) is arranged to

receive said enabling signal ($S_9$) and said switching signal and to provide the enabling signal to said second logic circuit means ($12_A$).

6. A protective relay system as claimed in any preceding claim, characterised in that the signal discontinuity detection means ($11_A$) includes first and second signal discontinuity detection circuits ($11_{A1}$, $11_{A2}$) connected to receive said third and fourth electrical signals, respectively, and to produce first ($S_{9A1}$) and second ($S_{9A2}$) enabling signals, respectively, in the event of discontinuity in said signals, and an AND circuit ($21_A$) connected to receive said first and second enabling signals and to produce said enabling signal ($S_{16}$).

7. A protective relay system as claimed in claim 6, characterised in that the switching judgment circuit ($22_A$) is connected to receive said first electrical signal ($S_4$) and on detecting an erroneous state of said first electrical signal to produce a switching signal ($S_{15}$) which is supplied to said switching means.

8. A protective relay system as claimed in claim 6, characterised in that the switching judgment circuit ($22_A$) is connected to receive said relay lock signal ($S_6$) from said error detection means ($6_A$) and to produce a switching signal ($S_{15}$) based on said relay lock signal, said switching signal being supplied to said switching means.

**Patentansprüche**

1. Schutzrelaissystem für eine Übertragungsleitung (1) zwischen einer ersten und einer zweiten elektrischen Station (A, B), wobei die erste Station (A) einen Energiekreisunterbrecher ($8_A$) aufweist, der in die Übertragungsleitung geschaltet ist, sowie eine Einrichtung ($2_A$) zur Ermittlung einer ersten elektrischen Größe der Übertragungsleitung, und wobei die zweite elektrische Station (B) eine Einrichtung ($2_B$) zur Ermittlung einer zweiten elektrischen Größe der Übertragungsleitung aufweist; das System hat eine optische Übertragungseinrichtung mit einem ersten ($5_A$) und einem zweiten optischen Terminalgerät an der ersten (A) bzw. zweiten elektrischen Station, und eine optische Übertragungsleitung (41) ist zwischen das erste und zweite optische Terminalgerät geschaltet, wobei das zweite optische Terminalgerät so ausgebildet ist, daß es ein elektrisches Signal entsprechend der zweiten elektrischen Größe empfängt und es in ein optisches Signal umwandelt, das längs der optischen Übertragungsleitung übertragen wird, wobei das erste optische Terminalgerät ($5_A$) so ausgebildet ist, daß es das übertragene optische Signal empfängt und es in ein erstes elektrisches Signal ($S_4$) umwandelt ein erstes Schutzrelais ($3_A$) ist so ausgebildet, daß es das erste elektrische Signal ($S_4$) und ein Signal ($S_0$) entsprechend der ersten elektrischen Größe empfängt und ein erstes Relaisausgangssignal ($S_5$) erzeugt, wenn ein Fehler auf der Übertragungsleitung festgestellt wird, wobei eine Fehlerdetektoreinrichtung ($6_A$) so ausgebildet ist, daß sie das erste elektrische Signal ($S_4$) empfängt und ein Relaissperrsignal ($S_6$) erzeugt, wenn eine Anormalität in dem ersten elektrischen Signal ($S_4$) festgestellt wird; weiterhin ist eine erste logische Schaltungseinrichtung ($7_A$) so ausgebildet, daß sie das erste Relaisausgangssignal ($S_5$) und das Relaissperrsignal ($S_6$) empfängt und einen ersten Auslösebefehl ($S_7$) für den Kreisunterbrecher ($8_A$) erzeugt, wenn das erste Relaisausgangssignal ($S_5$) anzeigt, daß ein Fehler festgestellt wird, und das Relaissperrsignal ($S_6$) anzeigt, daß keine Anormalität im ersten elektrischen Signal ($S_4$) auftritt, dadurch gekennzeichnet, daß das System folgende Merkmale aufweist: ein zweites Schutzrelais ($9_A$), das so ausgebildet ist, daß es das Signal ($S_0$) entsprechend der ersten elektrischen Größe empfängt und ein zweites Relaisausgangssignal ($S_8$) erzeugt, wenn ein Fehler auf der Übertragungsleitung auf der Grundlage der ersten elektrischen Größe festgestellt wird; eine Signaldiskontinuitätsdetektoreinrichtung ($11_A$), die so ausgebildet ist, daß sie das erste elektrische Signal ($S_4$) empfängt und eine Freigabesignal ($S_9$) erzeugt, wenn eine Diskontinuität im ersten elektrischen Signal festgestellt wird; weiterhin eine zweite logische Schaltungseinrichtung ($12_A$), die so ausgebildet ist, das sie das zweite Relaisausgangssignal ($S_8$) und das Freigabesignal ($S_9$) empfängt, um einen zweiten Auslösebefehl ($S_{10}$) für den Kreisunterbrecher zu erzeugen, wenn das zweite Relaisausgangssignal ($S_8$) einen Fehler auf der Übertragungsleitung anzeigt und das Freigabesignal ($S_9$) eine Diskontinuität im ersten elektrischen Signal anzeigt; das erste optische Terminalgerät ($5_A$) umfaßt ein drittes und viertes optisches Terminalgerät ($5_{A1}$, $5_{A2}$); das zweite optische Terminalgerät umfaßt ein fünftes und sechstes optisches Terminalgerät, das so geschaltet ist, daß es das Signal entsprechend der zweiten elektrischen Größe empfängt, um das Signal in ein erstens bzw. zweites optisches Signal ($S_{3A1}$, $S_{3A2}$) als das optische Signal umzuwandeln; weiterhin empfängt die optische Übertragungsleitung ($4_{A1}$) das erste und zweite optische Signal und überträgt sie zu dem dritten bzw. vierten optischen Terminalgerät, wo sie in dritte bzw. vierte elektrische Signale ($S_{4A1}$, $S_{4A2}$) umgewandelt werden; eine Schaltereinrichtung ($19_A$) ist so geschaltet, daß sie das dritte und vierte elektrische Signal empfängt und aus dem dritten und vierten elektrischen Signal eines auswählt, um das erste elektrische Signal ($S_4$) zu erzeugen; schließlich ist ein Schaltbefehlskreis ($20_A$) oder ein Prüfkreis ($22_A$) so ausgebildet, daß der Ausgang der Schalteinrichtung ($19_A$) so geschaltet wird, daß von dem dritten und vierten elektrischen Signal das andere ausgewählt wird, wenn eine Diskontinuität festgestellt wird.

2. Schutzrelaissystem nach Anspruch 1, dadurch gekennzeichnet, daß die Signaldiskontinuitätsdetektoreinrichtung ($11_A$) so ausgebildet ist, daß sie das erste elektrische Signal ($S_4$) empfängt und ein Freigabesignal ($S_{12}$) nur für eine bestimmte Zeitperiode erzeugt, wenn eine Diskontinuität im ersten elektrischen Signal festgestellt wird, wobei die Zeitperiode auch für den zweiten Auslösebefehl ausreicht, um das Auslösen des Kreisunterbrechers durchzuführen.

3. Schutzrelaissystem nach Anspruch 2, dadurch gekennzeichnet, daß die Signaldiskontinuitätsdetektoreinrichtung ($11_A$) eine Einrichtung ($14_A$) aufweist, die so geschaltet ist, daß sie das Freigabesignal ($S_9$) empfängt und es der zweiten logischen Schaltungseinrichtung ($12_A$) nur während einer bestimmten Zeitperiode nach Feststellung der Diskontinuität im ersten elektrischen Signal zuführt.

4. Schutzrelaissystem nach einem der vorhergehenden Ansprüche, dadurch gekennzeichnet, daß die optische Übertragungsleitung ($4_1$), eine erste und zweite optische Übertragungsleitung aufweist, die so geschaltet sind, daß sie das erste und zweite optische Signal empfangen und zu dem dritten bzw. vierten optischen Terminalgerät übertragen.

5. Schutzrelaissystem nach einem der vorhergehenden Ansprüche, dadurch gekennzeichnet, daß der Schaltbefehlskreis ($20_A$) so ausgebildet ist, daß er das Freigabesignal ($S_9$) empfängt und ein Schaltsignal ($S_{15}$) erzeugt, und daß ein UND-Glied ($21_A$) so ausgebildet ist, daß es das Freigabesignal ($S_9$) und das Schaltsignal empfängt und das Freigabesignal der zweiten logischen Schaltungseinrichtung zuführt.

6. Schutzrelaissystem nach einem der vorhergehenden Ansprüche, dadurch gekennzeichnet, daß die Signaldiskontinuitätsdetektoreinrichtung ($11_A$) einen ersten und zweiten Signaldiskontinuitätsdetektorkreis ($11_{A1}$, $11_A$) aufweist, die so geschaltet sind, daß sie das dritte bzw. vierte elektrische Signal empfangen und ein erstes ($S_{9A1}$) bzw. ($S_{9A2}$) Freigabesignal im Falle einer Diskontinuität dieser Signale erzeugen, und daß ein UND-Glied ($21_A$) so geschaltet ist, daß es das erste und zweite Freigabesignal empfängt und das Freigabesignal ($S_{16}$) erzeugt.

7. Schutzrelaissystem nach Anspruch 6, dadurch gekennzeichnet, daß der Schaltprüfkreis ($22_A$) so geschaltet ist, daß er das erste elektrische Signal ($S_4$) empfängt und bei Feststellung eines fehlerhaften Zustandes des ersten elektrischen Signals ein Schaltsignal ($S_{15}$) erzeugt, das der Schalteinrichtung zugeführt wird.

8. Schutzrelaissystem nach Anspruch 6, dadurch gekennzeichnet, daß der Schaltprüfkreis ($22_A$) so geschaltet ist, deß er das Relaissperrsignal ($S_6$) von der Fehlerdetektoreinrichtung ($6_A$) empfängt und ein Schaltsignal ($S_{15}$) auf der Grundlage des Relaissperrsignals erzeugt, wobei das Schaltsignal der Schalteinrichtung zugeführt wird.

**Revendications**

1. Système de relais de protection pour une ligne de transmission (1) reliant une première et une seconde stations électriques (A, B), la première station (A) comportant un disjoncteur ($8_A$) monté dans ladite ligne de transmission et des moyens ($2_A$) pour détecter une première grandeur électrique de ladite ligne de transmission, et une second station électrique, ladite seconde station électrique (B) comportant des moyens ($2_B$) pour détecter une seconde grandeur électrique de ladite ligne de transmission; ledit système comprenant des moyens de transmission optiques incluant des premiers et des seconds moyens terminaux optiques ($5_A$, $5_B$) situés respectivement à ladite première station électrique (A) et à ladite seconde station électrique (B), et une ligne de transmission optique ($4_1$) branchée entre lesdits premiers et seconds moyens terminaux optiques, lesdits seconds moyens optiques étant conçus pour recevoir un signal électrique correspondant à ladite second grandeur électrique ou pour convertir celle-ci en un signal optique qui est transmis le long de ladite ligne de transmission optique, lesdits premiers moyens de terminaison optiques ($5_A$) étant conçus pour recevoir ledit signal optique transmis et pour le convertir en un premier signal électrique ($S_4$); un premier relais de protection ($3_A$) étant prévu pour recevoir ledit premier signal électrique ($S_4$) et un signal ($S_0$) correspondant à ladite première grandeur électrique et pour produire un premier signal de sortie de relais ($S_5$) dans l'éventualité où un défaut serait détecté sur ladite ligne de transmission, des moyens de détection d'erreur ($6_A$) conçus pour recevoir ledit premier signal électrique ($S_4$) et pour produire un signal de verrouillage de relais ($S_6$) dans le cas où une anomalie serait détectée dans le premier signal électrique ($S_4$); et des premiers circuits logiques ($7_A$) conçus pour recevoir ledit signal de sortie de relais ($S_5$) et ledit signal de verrouillage de relais ($S_6$) et pour produire une première commande de déclenchement ($S_7$) pour ledit disjoncteur ($8_A$) quand ledit premier signal de sortie de relais ($S_5$) indique qu'un défait a été détecté, tandis que ledit signal de verrouillage de relais ($S_6$) indique l'absence d'une anomalie dans le premier signal électrique ($S_4$); caractérisé en ce que le système comprend, en outre, un second relais de protection ($9_A$) conçu pour recevoir le signal ($Si_0$) correspondant à la première grandeur électrique et pour produire un second signal de sortie de relais ($S_8$) quand un défaut sur la ligne de transmission est détecté en se basant sur la première grandeur électrique; des moyens de détection de discontinuitié de signal ($11_A$) conçus pour recevoir ledit premier signal électrique ($S_4$) et pour produire un signal d'activation ($S_9$) dans l'éventualité où une discontinuité est détectée dans le premier signal électrique; et des seconds moyens logiques ($12_A$) conçus pour recevoir ledit second signal de sortie de relais ($S_8$) et ledit signal d'activation ($S_9$) et pour produire une seconde commande déclenchement ($S_{10}$) pour le disjoncteur quand ledit second signal de sortie de relais ($S_8$) indique la présence d'un défaut sur la ligne de transmission et ledit signal d'activation ($S_9$) une discontinuité dans le premier signal électrique; lesdits premiers moyens terminaux optiques ($5_A$) comprenant des troisièmes et des quatrièmes moyens terminaux optiques ($5_{A1}$, $5_{A2}$); lesdits seconds moyens terminaux optiques comprenant des cinquièmes et des sixièmes moyens terminaux optiques connectés pour recevoir ledit signal correspondant à ladite seconde grandeur électrique afin de convertir ledit signal en premiers et seconds signaux optiques ($S_{3A1}$, $S_{3A2}$), respectivement, en tant que lesdits signaux optiques; ladite ligne de transmission ($4_1$) recevant lesdits premiers et seconds signaux optiques et les transmettant auxdits troisièmes et quatrièmes moyens terminaux optiques respectivement, où ils sont convertis respectivement en troisièmes et en quatrièmes signaux électriques ($S_{4A1}$, $S_{4A2}$), respectivement; des moyens de commutation ($19_A$) connectés pour recevoir lesdits troisièmes et quatrièmes signaux électriques et pour sélectionner l'un desdits troisièmes et quatrièmes signaux électriques afin de produire ledit premier signal électrique ($S_4$); et un circuit de commande de commutation ($20_A$) ou un circuit de jugement ($22_A$) conçu pour commuter les signae sortie des moyens de commutation ($19_A$) afin de sélectionner l'autre desdits troisièmes et quatrièmes signaux électriques quand une discontinuité est détectée.

2. Système de relais de protection selon la revendication 1, caractérisé en ce que les moyens de détection des discontinuités des signaux ($11_A$) sont conçus pour recevoir ledit premier signal électrique ($S_4$) et pour produire un signal d'activation ($S_{12}$) prendant une période de temps prédétemrinée seulement dans l'éventualité où une discontinuité serait détectée dans ledit premier signal électrique, ladite période de temps étant suffisante pour que la seconde commande de déclenchement produise un déclenchement du disjoncteur.

3. Système de relais de protection selon la revendication 2, caractérisé en ce que lesdits moyens de détection des discontinuitiés des signaux ($11_A$) incluent des moyens ($14_A$) connectés pour recevoir ledit signal d'activation ($S_9$) et pour fournir celui-ci aux seconds circuits logiques ($12_A$) pendant une période de temps prédéterminée seulement après que ladite discontinuité dans ledit premier signal électrique a été détectée.

4. Système de relais de protection selon l'une quelconque des revendications précédentes, caractérisé en ce que ladite ligne de transmission optique ($A_1$) inclut une première et une seconde lignes de transmission optiques connectées pour recevoir et transmettre lesdits premiers et seconds signaux optiques respectivements auxdits troisièmes et quatrièmes moyens terminaux optiques.

5. Système de relais de protection selon l'une quelconque des revendications précédentes, caractérisé en ce que le circuit de commande de commutation ($20_A$) est conçu pour recevoir ledit signal d'activation ($S_9$) et pour produire un signal de commutation ($S_{15}$), et un circuit ET ($21_A$) conçu pour recevoir ledit signal d'activation ($S_9$) et pour fournir ce signal d'activation audit second circuit logique ($12_A$).

6. Système de relais de protection selon l'une quelconque des revendications précédentes, caractérisé en ce que lesdits moyens de détection de discontinuités des signaux ($11_A$) incluent des premiers et des seconds circuits de détection de discontinuités de signaux ($11_{A1}$, $11_{A2}$) connectés pour recevoir respectivement lesdits troisièmes et quatrièmes signaux et pour produire respectivement des premiers et des seconds signaux d'activation ($S_{9A1}$, $S_{9A2}$) dans l'éventualité où une discontinuité existerait dans lesdits signaux, et un circuit ET ($21_A$) connecté pour recevoir lesdits premiers et seconds signaux d'activation et pour produire ledit signal d'activation ($S_{16}$).

7. Système de relais de protection selon la revendication 6, caractérisé en ce que le circuit de jugement ($22_A$) est connecté pour recevoir ledit premier signal électrique ($S_4$) et, pour produire, en détectant un état fautif ou erroné dudit premier signal électrique, un signal de commutation ($S_{15}$) qui est fourni auxdits moyens de commutation.

8. Système de relais de protection selon la revendication 6, caractérisé en ce que le circuit de jugement ($22_A$) est connecté pour recevoir ledit signal de verrouillage de relais ($S_6$) desdits moyens de détection d'erreurs ($6_A$) et pour produire un signal de commutation ($S_{15}$) basé sur ledit signal de verrouillage de relais, ledit signal de commutation étant fourni auxdits moyens de commutation.

SB
B
$8_B$
$2_B$
$S_0'$
$i_B$
4
$S_2$
$S_3$
$5_A$
$S_1$
$S_4$
1
$3_A$
$2_A$
$i_A$
$S_0$
$S_5$
$S_6$
$6_A$
$7_A$
$8_A$
$S_7$
A
SA

PRIOR ART
FIG.1.

SB
B
8B
2B
iB
4
S3
S2
5A
S4
S1
3A
1
6A
11A
S0
2A
S5
S6
7A
S9
8A
S11
S7
13A
OR
S10
12A
AND
S8
9A
SV
10A
A
iA
SA
vA
23A

FIG.2.

S0
t0
S4
ΔT1
S5
t1
S6
S7
ΔT2
S8
t2
S9
S10
S11

FIG.3(a).

S0
S4
t3
t7
S5
ΔT1
ΔT3
t6
t8
S6
t4
t9
S7
S8
S9
t5
t10
S10
S11

FIG.3(b).

$S_0$
$t_{11}$
$S_4$
$\Delta T_1$
$S_5$
$t_{14}$
$S_6$
$t_{12}$
$S_7$
$\Delta T_2$
$S_8$
$t_{15}$
$S_9$
$t_{13}$
$S_{10}$
$S_{11}$


FIG.3(c).

SB
B
8B
2B
iB
4
S2
S3
5A
S4
S1
1
3A
6A
S0
2A
S5
S6
7A
S9
11A
S0
S12
8A
S11
S7
14A
13A
OR
S10
12A
AND
S8
9A
iA
A
SV
10A
SA
vA

FIG.4.

S0
t11
S4
ΔT1
S5
t14
S6
t12
S7
ΔT2
S8
t15
S9
t13
TM
S12
t16
S10
S11

FIG.5.

S1
$15_1$
S131
16
$5_A$
S21
17
S3
S4
S141
$\bar{O}/E$
$15_2$
S132
S142
S2
$E/\bar{O}$
$15_n$
S13n
S20
18
S14n
S9
$12_A$
$11_{A'}$

FIG.6.

SB
B
8B
2B
iB
A1
S3A1
S2A1
S2A2
S3A2
5A1
5A2
S4A1
S15
19A
S4A2
20A
S1
S4
1
3A
6A
21A
iA
S0
S5
S6
S9
AND
11A
2A
S11
7A
8A
13A
OR
S10
S8
9A
S16
A
AND
12A
SV
10A
SA
VA

FIG.7.

SB
B
8B
2B
41
iB
1
iA
SA
A
8A
2A
3A
S0
S1
19A
S2A1
S3A1
S2A2
S3A2
5A1
5A2
S15
S4A2
S4A1
11A1
11A2
S4
6A
22A
S5
S6
S0
7A
S11
13A
OR
S10
AND
12A
S8
9A
SV
10A
iA
S16
S9A1
S9A2
AND
21A
FIG.8.

SB
B
8B
2B
iB
41
S3A1
S2A2
S3A2
S2A1
5A2
5A1
S15
S4A2
S4A1
11A1
11A2
1
19A
S1
3A
S4
S0
iA
S5
6A
22A
SgA2
SgA1
2A
S6
S0
AND
21A
S11
8A
7A
9A
S16
A
13A
OR
S10
AND
12A
S8
SV
10A
SA
iA

FIG.9.